# EUROPÄISCHE PATENTANMELDUNG

(11) **EP 3 139 048 A1**
(43) Veröffentlichungstag der Anmeldung: **08.03.2017**
(21) Anmeldenummer: 15183483.5
(22) Anmeldetag: 02.09.2015
(51) Int. Cl.: F16B 37/14

(54) **MUTTER**

(71) Anmelder: NEDSCHROEF PLETTENBERG GmbH, 58840 Plettenberg (DE)
(72) Erfinder: Hirschfeld, Henning, 58840 Plettenberg (DE)
(74) Vertreter: Patentanwälte Dörner & Kötter PartG mbB

(57) **Zusammenfassung**

Die Erfindung betrifft eine Mutter, insbesondere Radmutter, umfassend einen Mutternkörper, der endseitig einen Flanschabschnitt aufweist, an den sich ein durchmesserreduzierter Hülsenabschnitt anschließt, wodurch ein Anschlag gebildet ist, wobei der Hülsenabschnitt (3) von einem Haubenteil (6) umschlossen ist, das mit dem Hülsenabschnitt (3) form- und/oder kraftschlüssig verbunden ist.

## Beschreibung

Die Erfindung betrifft eine Mutter, insbesondere Radmutter, umfassend einen Mutternkörper, der endseitig einen Flanschabschnitt aufweist, an den sich ein durchmesserreduzierter Hülsenabschnitt anschließt.

Die Verschraubung von Rädern eines Kraftfahrzeuges erfolgt regelmäßig mittels Radmuttern, welche auf an der Nabe des Kraftfahrzeuges angeordnete Gewindebolzen aufgeschraubt werden, wodurch die jeweilige Felge an der Nabe kraft- und formschlüssig befestigt wird. Diese Radmuttern sind optisch häufig nicht besonders ansprechend. Daher werden diese Muttern oftmals aus Designgründen entweder mit einer Radkappe abgedeckt oder mithilfe einer Edelstahlkappe verkapselt. Bei solchen Edelstahlkappen kann es durch mehrfache Montage und Demontage des Rades dazu kommen, dass sich die Edelstahlkappe von der Mutter löst, was dazu führt, dass die Mutter nicht mehr korrekt montiert oder demontiert werden kann. Darüber hinaus ist das Design der Mutter im Zusammenspiel mit der Felge bei Verlust der Kappe nicht mehr ansprechend. Weiterhin kann unter ungünstigen Montagebedingungen Feuchtigkeit zwischen Mutter und Kappe dringen, was zu Korrosion führen kann, welche ebenfalls eine optische Beeinträchtigung mit sich bringt.

Hier will die Erfindung Abhilfe schaffen. Der Erfindung liegt die Aufgabe zu Grunde, eine Mutter, insbesondere eine Radmutter zur Befestigung eines Rades an einem Kraftfahrzeug bereitzustellen, die ohne Beeinträchtigung ihrer Funktion ein ansprechendes Design gewährleistet. Gemäß der Erfindung wird diese Aufgabe durch eine Mutter mit den Merkmalen des kennzeichnenden Teils des Patentanspruchs 1 gelöst.

Mit der Erfindung ist eine Mutter, insbesondere Radmutter zu Befestigung eines Rades an ein Kraftfahrzeug bereitgestellt, die ein ansprechendes Design gewährleistet. Dadurch, dass der Hülsenabschnitt von einem Haubenteil umschlossen ist, das mit dem Hülsenabschnitt form- und/oder kraftschlüssig verbunden ist, ist eine unverlierbare Verbindung zwischen Haubenteil und Mutternkörper gewährleistet, die auch bei mehrfacher Montage und Demontage eines Rades erhalten bleibt.

In Weiterbildung der Erfindung ist der Flanschabschnitt zumindest abschnittsweise in Richtung seines dem Hülsenabschnitt abgewandten Endes konisch zulaufend ausgebildet. Hierdurch ist eine gute Zentrierung der Mutter in der entsprechenden Bohrung der Felge eines zu befestigenden Rades bewirkt.

In Ausgestaltung der Erfindung weist das Haubenteil einen umlaufenden Kragen auf, der an dem Anschlag diesen vollständig überdeckend anliegt. Hierdurch ist eine vollständige optische Abdeckung des Mutternkörpers bewirkt. Bevorzugt ist der umlaufende Kragen derart ausgebildet, dass er den Anschlag umlaufend überragt. Hierdurch ist eine Abdeckung des Übergangs zwischen Mutter und Felge erzielt, wodurch der ästhetische Eindruck weiter verbessert ist.

In weiterer Ausgestaltung der Erfindung weist die Außenmantelfläche des Hülsenabschnitts einen unrunden, insbesondere vieleckigen Querschnitt auf, der mit der Innenmantelfläche des Haubenteils korrespondiert, insbesondere der Innenmantelfläche des Haubenteils entspricht. Hierdurch ist eine formschlüssige Verbindung des Haubenteils mit dem Mutterkörper bewirkt. Alternativ kann auch eine Torxgeometrie vorgesehen sein. Bevorzugt ist das Haubenteil auf den Hülsenabschnitt aufgeschrumpft und/oder mit diesem verklebt, oder aber mit dem Hülsenabschnitt verschweißt oder verlötet. Hierdurch ist eine unverlierbare Verbindung zwischen Haubenteil und Mutternkörper gewährleistet.

Vorteilhaft ist der Hülsenabschnitt mit dem an diesem angeformten Flanschabschnitt aus Stahl und das Haubenteil aus Edelstahl, Aluminium oder Kunststoff hergestellt. Hierdurch ist eine robuste Schraubverbindung in Kombination mit einer optisch ansprechenden Außengestaltung der Mutter ermöglicht.

In Ausgestaltung der Erfindung weist der Mutternkörper ein Innengewinde auf, das sich bis oberhalb des Anschlags in den Hülsenabschnitt hinein erstreckt, woran sich ein innendurchmessererweiterter Abschnitt anschließt. Hierdurch ist eine zuverlässige Schraubverbindung bei unterschiedlichen Längen der Gewindebolzen, auf welche die Mutter montiert wird, erzielt.

In weiterer Ausgestaltung der Erfindung geht das Innengewinde an seinem dem innendurchmessererweiterten Abschnitt gegenüberliegenden Ende in einen gewindefreien, zumindest bereichsweise konisch sich erweiternden Zentrierabschnitt über, dessen Innendurchmesser größer ist, als der Kerndurchmesser des Innengewindes. Hierdurch ist die Montage der Mutter auf einem Gewindebolzen erleichtert.

In Ausgestaltung der Erfindung entspricht der maximale Innendurchmesser des Zentrierabschnitts im Wesentlichen dem Innendurchmesser des innendurchmessererweiterten Abschnitts. Hierdurch ist die Herstellung des Mutternkörpers erleichtert.

In weiterer Ausgestaltung der Erfindung weist das Haubenteil an seinem dem Kragen gegenüberliegenden Ende einen Aufnahmeraum auf, dessen Innendurchmesser größer als der Kerndurchmesser des Innengewindes des Mutternkörpers ist. Durch diesen Aufnahmeraum ist der Einsatz der Mutter bei unterschiedlichsten Gewindebolzenlängen ermöglicht.

Vorteilhaft entspricht der Innendurchmesser des Aufnahmeraums im Wesentlichen dem Innendurchmesser des innendurchmessererweiterten Abschnitt des Mutternkörpers. Hierdurch ist die Herstellung des Mutternkörpers weiter vereinfacht.

In weiterer Ausgestaltung der Erfindung ist das Haubenteil an seinem dem Kragen gegenüberliegenden Ende kuppelförmig ausgebildet. Hierdurch ist eine ansprechende ästhetische Gestaltung erzielt. Zudem sind so Schmutzanhaftungen an dem kopfseitigen Ende des Haubenteils reduziert.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

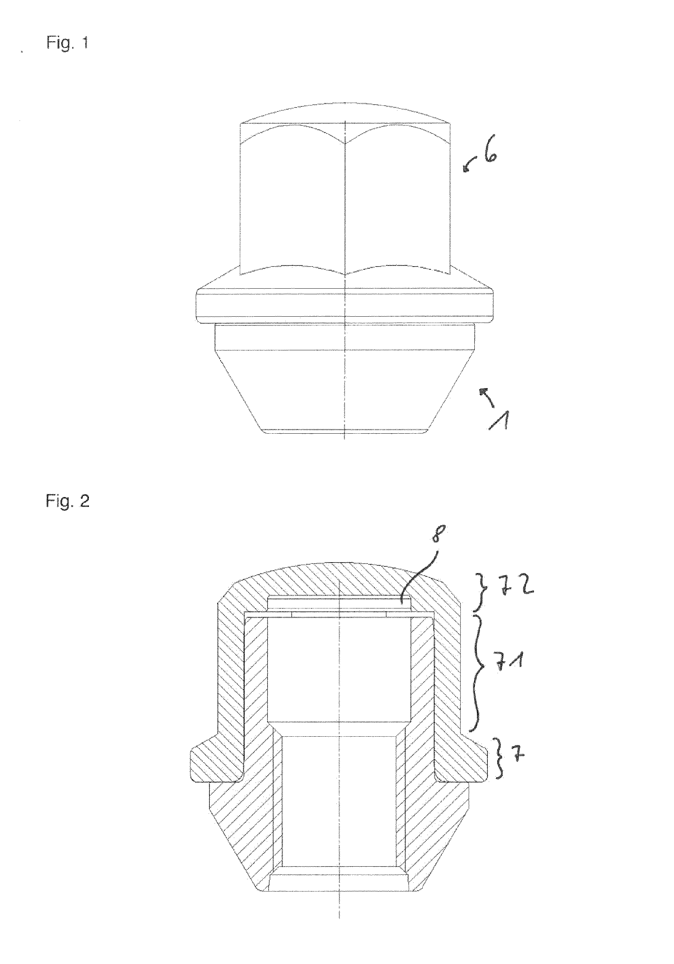

- Figur 1: die schematische Darstellung einer Radmutter;
- Figur 2: die Darstellung der Radmutter aus Figur 1 im Längsschnitt;

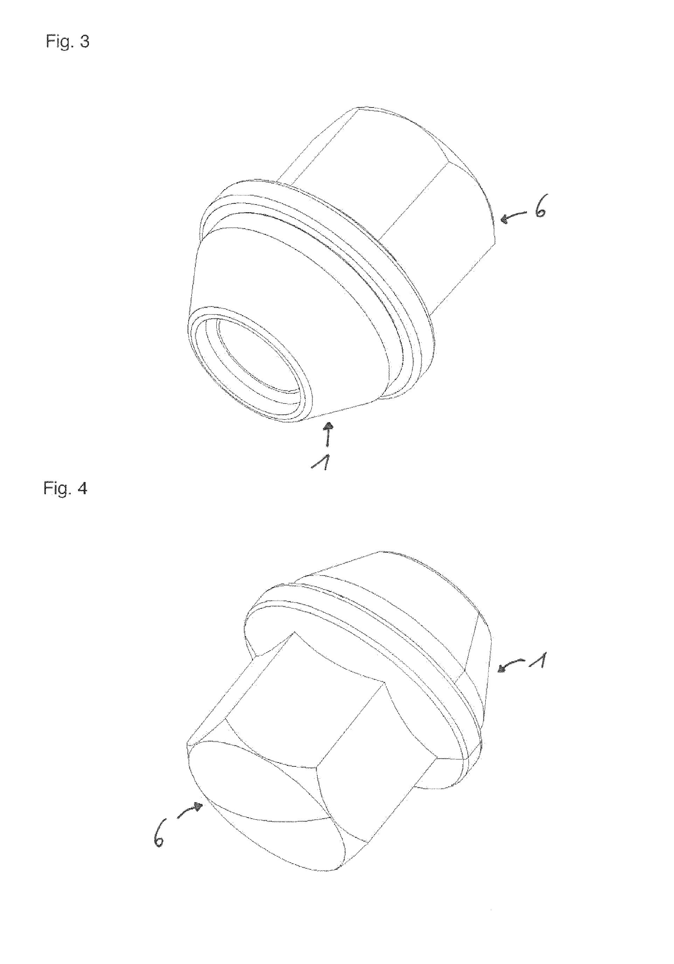

- Figur 3: die Radmutter aus Figur 1 in einer räumlichen Ansicht von unten;
- Figur 4: die Radmutter aus Figur 1 in einer räumlichen Ansicht von oben;

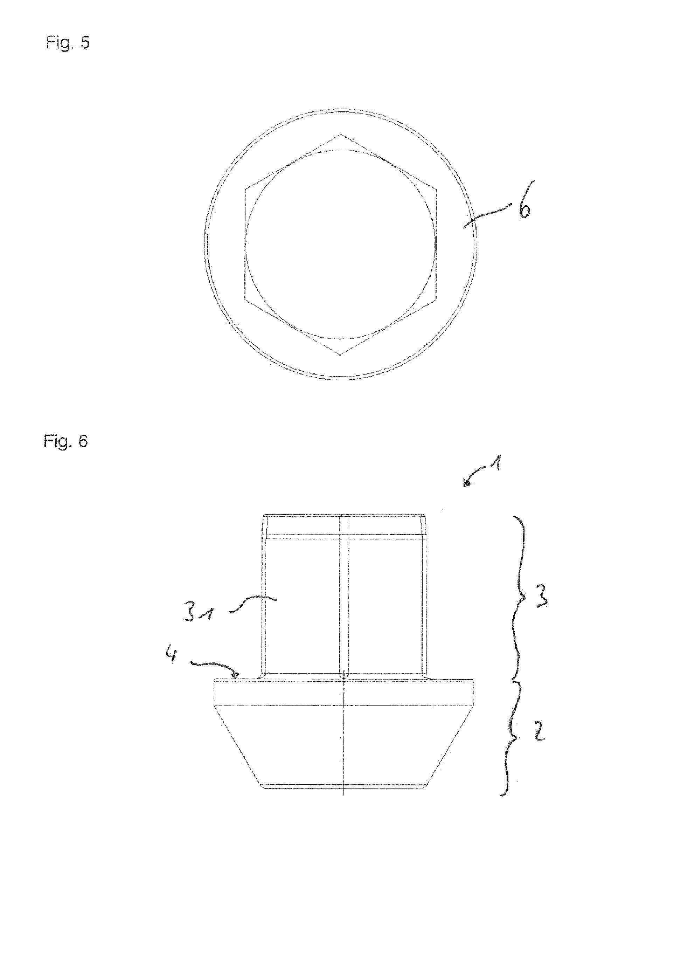

- Figur 5: die Darstellung der Radmutter aus Figur 1 in der Draufsicht;
- Figur 6: die schematische Darstellung des Mutternkörpers der Mutter aus Figur 1;

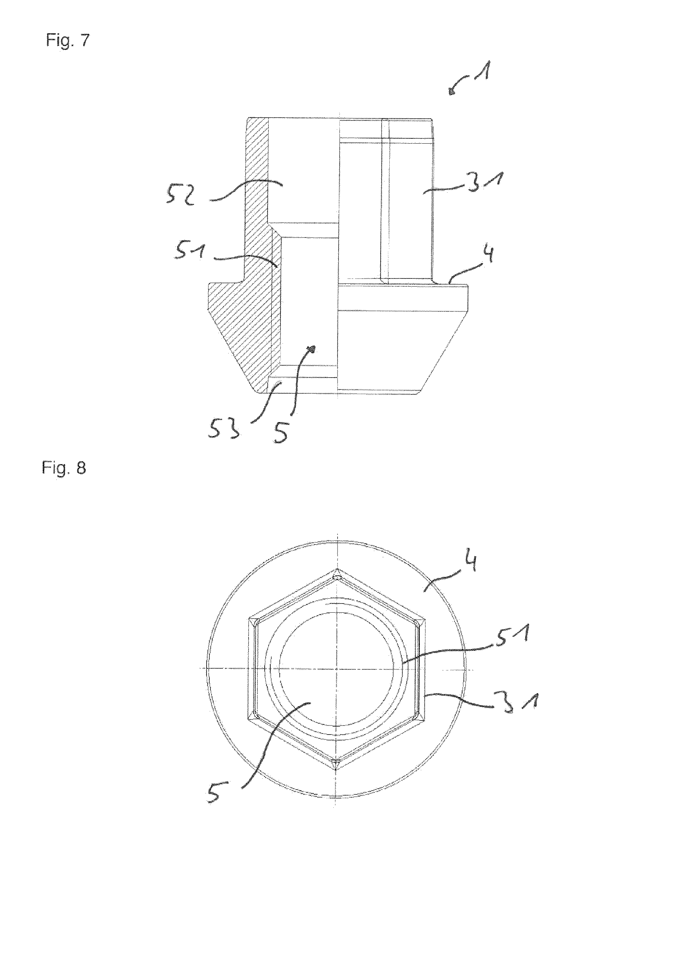

- Figur 7: die Darstellung des Mutternkörpers aus Figur 6 im Teilschnitt;
- Figur 8: die Darstellung des Mutternkörpers aus Figur 6 in der Draufsicht;

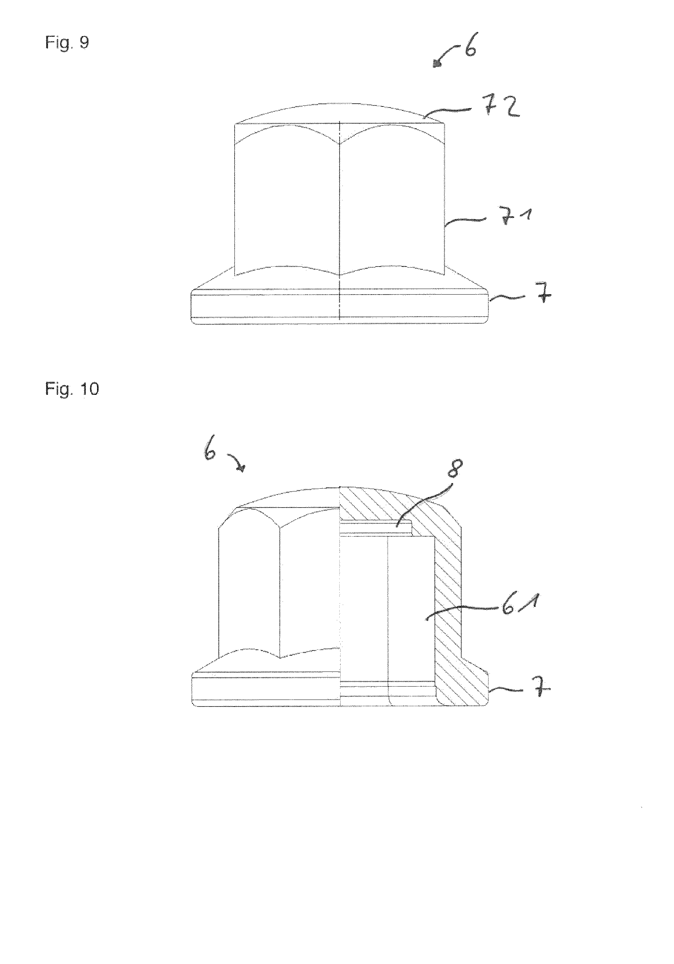

- Figur 9: die schematische Darstellung des Haubenteils der Mutter aus Figur 1;
- Figur 10: die Darstellung des Haubenteils aus Figur 9 im Teilschnitt;

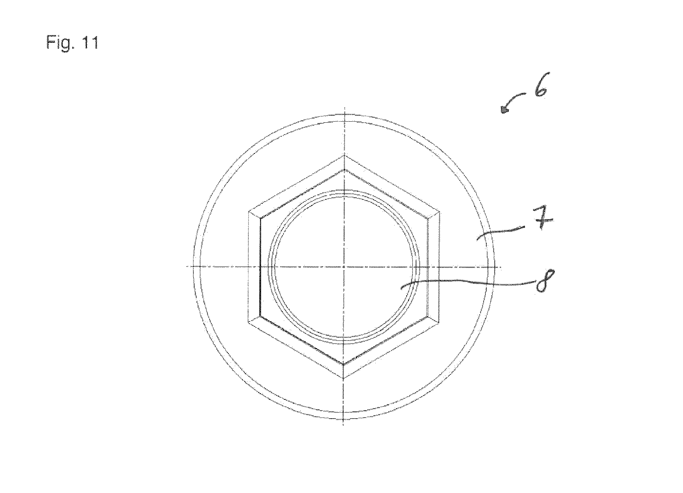

- Figur 11: das Haubenteil aus Figur 9 in der Ansicht von unten.

Die als Ausführungsbeispiel gewählte Radmutter besteht im Wesentlichen aus einem Mutternkörper 1, der mit einem Haubenteil 6 form- und kraftschlüssig verbunden ist.

Der Mutternkörper 1 ist als rohrförmiges Stahlteil ausgebildet und weist einen Flanschabschnitt 2 auf, an den sich ein Hülsenabschnitt 3 anschließt. Der Flanschabschnitt 2 ist in Richtung des Hülsenabschnitts 3 sich konusförmig nach außen erweiternd ausgebildet. Der Hülsenabschnitt 3 ist gegenüber dem Flanschabschnitt 2 in seinem Außendurchmesser reduziert ausgebildet, wodurch ein Anschlag 4 gebildet ist. Der Hülsenabschnitt 3 weist eine Außenmantelfläche 31 auf, deren Querschnitt im Ausführungsbeispiel in Form eines regelmäßigen Sechskants ausgebildet ist.

Der Mutternkörper 1 ist entlang seiner Mittelachse mit einer Durchgangsbohrung 5 versehen, die ein Innengewinde 51 aufweist, das sich bis oberhalb des Anschlags 4 des Mutternkörpers 1 erstreckt, woran sich ein gewindefreier, innendurchmessererweiterter Abschnitt 52 anschließt. An seinem dem innendurchmessererweiterten Abschnitt 52 gegenüberliegenden Ende geht das Innengewinde 51 in einen gewindefreien, konisch sich nach außen erweiternden Zentrierabschnitt 53 über, dessen maximaler Innendurchmesser dem Innendurchmesser des innendurchmessererweiterten Abschnitts 52 entspricht. An seinem dem Flanschabschnitt 2 gegenüberliegenden Ende ist der Hülsenabschnitt 3 des Mutternkörpers 1 konisch zulaufend ausgebildet, wodurch die Einführung des Hülsenabschnitts 3 in das Haubenteil 6 erleichtert ist.

Das Haubenteil 6 ist im Ausführungsbeispiel als im Wesentlichen topfförmig ausgebildetes Edelstahlteil hergestellt, an dessen offenen Ende außen umlaufend ein Kragen 7 angeformt ist. An den Kragen 7 schließt sich ein in Form eines regelmäßigen Sechskants ausgebildeter Ringabschnitt 71 an, der über einen Kuppelabschnitt 72 verschlossen ist. Innen ist das Haubenteil 6 in Form eines Innensechskants gestaltet, dessen Innenmantelfläche 61 im Querschnitt eine regelmäßige Sechskantkontur aufweist. Die Innenmantelfläche 61 des Haubenteils 6 entspricht im Wesentlichen der als Außensechskant ausgebildeten Außenmantelfläche 31 des Hülsenabschnitts 3. Innen ist in den Kuppelabschnitt 72 ein Aufnahmeraum 8 in Form einer zylindrischen Ausnehmung eingebracht, deren Innendurchmesser gegenüber der Innenmantelfläche 61 des Haubenteils 6 reduziert ist. Im Ausführungsbeispiel entspricht der Innendurchmesser des Aufnahmeraums 8 dem Innendurchmesser des innendurchmessererweiterten Abschnitts 52 der Durchgangsbohrung 5 des Mutternkörpers 1.

Das Haubenteil 6 ist derart auf den Mutternkörper 1 aufgebracht, dass der Kragen 7 auf dem Anschlag 4 diesen umlaufend überragend aufliegt. Die Länge des Hülsenabschnitts 3 ist derart gewählt, das zwischen dem Hülsenabschnitt 3 und dem Kuppelabschnitt 72 des Haubenteils 6 ein Abstand gebildet ist. Die einander entsprechend ausgebildete Außenmantelfläche 31 des Hülsenabschnitts 3 und Innenmantelfläche 61 des Haubenteils 6 liegen in Art einer Presspassung aneinander an. Im Ausführungsbeispiel wurde das Haubenteil 6 auf den Hülsenabschnitt 3 des Mutternkörpers 1 aufgeschrumpft, wodurch eine form- und kraftschlüssige Verbindung gebildet ist.

In einer - nicht dargestellten - Abwandlung des vorstehenden Ausführungsbeispiels kann das Haubenteil 6 innen mit einem radial umlaufenden Steg versehen sein, der in montiertem Zustand in eine entsprechend angeordnete radial umlaufende Nut des Hülsenabschnitts 3 eingreift. Hierdurch ist eine weitere axiale Sicherung des Haubenteils 6 auf dem Hülsenabschnitt 3 erzielt. Alternativ oder zusätzlich können Hülsenabschnitt drei und Haubenteil 6 auch miteinander verklebt sein. Des Weiteren können auf der Außenmantelfläche 31 des Hülsenabschnitts 3 auch axiale Rippen angeformt sein, die in entsprechende axial in die Innenmantelfläche 61 des Haubenteils 6 eingebrachten Nuten eingreifen. Hierdurch ist die Übertragung von Drehmomenten über das Haubenteil 6 auf dem Mutternkörper 1 verbessert.

Die erfindungsgemäße Mutter ist nicht auf den Anwendungsfall einer Radverschraubung beschränkt. Vielmehr sind auch weitere Einsatzgebiete denkbar, bei denen eine Kombination aus zwei Bauteilen unter Berücksichtigung technischer sowie optischer Gesichtspunkte erforderlich ist.

## Patentansprüche

1. Mutter, insbesondere Radmutter, umfassend einen Mutternkörper, der endseitig einen Flanschabschnitt aufweist, an den sich ein durchmesserreduzierter Hülsenabschnitt anschließt, wodurch ein Anschlag gebildet ist, **dadurch gekennzeichnet, dass** der Hülsenabschnitt (3) von einem Haubenteil (6) umschlossen ist, das mit dem Hülsenabschnitt (3) form- und/oder kraftschlüssig verbunden ist.

2. Mutter nach Anspruch 1, **dadurch gekennzeichnet, dass** der Flanschabschnitt (2) zumindest abschnittsweise in Richtung seines dem Hülsenabschnitt (3) abgewandten Endes konisch zulaufend ausgebildet ist.

3. Mutter nach Anspruch 2, **dadurch gekennzeichnet, dass** das Haubenteil (6) einen umlaufenden Kragen (7) aufweist, der an dem Anschlag (3) des Mutternkörpers (1) diesen vollständig überdeckend anliegt.

4. Mutter nach einem der vorgenannten Ansprüche, **dadurch gekennzeichnet, dass** die Außenmantelfläche (31) des Hülsenabschnitts (3) einen unrunden, insbesondere vieleckigen Querschnitt aufweist, der mit der Innenmantelfläche (61) des Haubenteils (6) korrespondiert, vorzugsweise der Innenmantelfläche (61) des Haubenteils (6) entspricht.

5. Mutter nach einem der vorgenannten Ansprüche, **dadurch gekennzeichnet, dass** das Haubenteil (6) auf den Hülsenabschnitt (3) aufgeschrumpft und/oder mit diesem verklebt ist oder mit dem Hülsenabschnitt (3) verschweißt oder verlötet ist.

6. Mutter nach einem der vorgenannten Ansprüche, **dadurch gekennzeichnet, dass** der Hülsenabschnitt (3) mit dem an diesem angeformten Flanschabschnitt (2) aus Stahl und das Haubenteil (6) aus Edelstahl, Aluminium oder Kunststoff hergestellt ist.

7. Mutter nach einem der vorgenannten Ansprüche, **dadurch gekennzeichnet, dass** der Mutternkörper (1) ein Innengewinde (51) aufweist, das sich bis oberhalb des Anschlags (4) in den Hülsenabschnitt (3) hinein erstreckt, woran sich ein innendurchmessererweiterter Abschnitt (52) anschließt.

8. Mutter nach Anspruch 7, **dadurch gekennzeichnet, dass** das Innengewinde (51) an seinem dem innendurchmessererweiterten Abschnitt (52) gegenüberliegenden Ende in einen gewindefreien, zumindest bereichsweise konisch sich erweiternden Zentrierabschnitt (53) übergeht, dessen Innendurchmesser größer ist, als der Kerndurchmesser des Innengewindes (51).

9. Mutter nach Anspruch 8, **dadurch gekennzeichnet, dass** der maximale Innendurchmesser des Zentrierabschnitts (53) im Wesentlichen dem Innendurchmesser des innendurchmessererweiterten Abschnitts (52) entspricht.

10. Mutter nach einem der vorgenannten Ansprüche, **dadurch gekennzeichnet, dass** das Haubenteil (6) an seinem dem Kragen (7) gegenüberliegenden Ende einen Aufnahmeraum (8) aufweist, dessen Innendurchmesser größer als der Kerndurchmesser des Innengewindes (51) des Mutternkörpers (1) ist.

11. Mutter nach Anspruch 10, **dadurch gekennzeichnet, dass** der Innendurchmesser des Aufnahmeraumes (8) im Wesentlichen dem Innendurchmesser des innendurchmessererweiterten Abschnitts (52) des Mutternkörpers (1) entspricht.

12. Mutter nach einem der vorgenannten Ansprüche, **dadurch gekennzeichnet, dass** das Haubenteil (6) an seinem dem Kragen (7) gegenüberliegenden Ende kuppelförmig ausgebildet ist.

13. Mutter nach einem der vorgenannten Ansprüche, **dadurch gekennzeichnet, dass** das Haubenteil (6) an seiner Innenmantelfläche (61) zumindest bereichsweise radial umlaufend mit einem Steg versehen ist, der in eine in der Außenmantelfläche (31) des Mutternkörpers (1) angeordnete, radial zumindest bereichsweise umlaufende Nut eingreift.
